# EUROPEAN PATENT APPLICATION

(11) **EP 4 487 685 A1**
(43) Date of publication of application: **08.01.2025**
(21) Application number: 24161940.2
(22) Date of filing: 07.03.2024
(51) Int. Cl.: A21B 1/48, A21B 3/04

(54) **STEAM INJECTION INSTALLATION IN AN INDUSTRIAL SPIRAL TYPE BREAD OVEN WITH THE ENTRY OF DOUGH PIECES THROUGH THE BOTTOM**

(30) Priority: 05.07.2023 RO 202300353
(71) Applicant: SG AI Robots, 417078 Bors Bihor (RO)
(72) Inventor: Gheorghe, Muscalu, 051224 Bucuresti (RO)

(57) **Abstract**

The invention refers to a method and an installation that increases the humidity in a spiral-type bread oven (1) with the entry of dough pieces through the lower part, using low-pressure steam of maximum 0.42 bar injected in the form of steam curtain at floors 1, 2 and 3 and in the form of a jet on floors 5 and 7. The installation, according to the invention, is composed of a thermally insulated vertical distributor (4), mounted inside or outside the oven with the role of distributing steam vertically on floors 1,2,3,5 and 7, 3 horizontal distributors (7) mounted outside zone 1 which is isolated both from zone 2 and from the inside of the oven (22) with refractory stainless steel sheet, with the role of injecting steam on a certain surface on each floor, 15 pipes (6) with 9 nozzles (8) each, through which steam is injected directly onto the surface of the dough pieces (12) that pass under the nozzles (8) and a system condensate drain (11) which is meant not to block the flow of steam through the pipes.

## Description

### Previously filed application

Industrial spiral bakery ovens are produced by the Tecnopool Italia Company in which the pieces of dough are inserted into a spiral type conveyor made of metal under which there are pipes filled with diathermic oil with a temperature of up to 300°C. The spiral is placed in a thermally insulated enclosure.

Dough loading to these types of ovens can be done through the upper part with the dough exiting through the lower part or vice versa, with the dough entering through the lower part of the spiral and exiting through the upper part.

In these types of ovens, three technological parameters are controlled: time, temperature and humidity that the dough needs to transform from dough into a finished baked product that respects an internal quality standard. The temperature in the oven is essential for the growth and baking of the dough and the humidity in the oven is essential for obtaining a glossy surface of the finished product without cracks.

The humidity in the oven is also very important for heat transfer; the higher the humidity, the faster the baking speed. A higher humidity percentage in the oven forms a barrier by condensing water on the surface of the dough. At the same time it favors the transfer of heat to dough's center. After the temperature on the surface of the piece of dough exceeds 100°C, the water evaporates completely, first from the superficial layer and then from the inner layers. In order to keep an optimal amount of humidity inside the piece of dough, it is important that the correct amount of steam is injected into the oven so that the humidity in the air in the baking room protects the surface of the dough.

The spiral type ovens were mainly designed with the dough entering through the upper part and the exit through the lower part because in the ovens where the dough enters through the lower part, the manufacturer failed to build an installation that would work properly from a technological point of view. In spiral type bread ovens, it is enough to inject the steam at the entrance to the oven and part of the steam will descend gravitationally along its entire height. In the spiral ovens with the entrance at the bottom, due to its higher density, the steam does not rise to the upper floors, where humidity is needed to protect the evaporation of the superficial layer of water on the dough. The manufacturer of the spiral type oven tried to solve the gravity problem by installing a pipe that had a series of nozzles above the metal strip where the dough circulated, and which followed the shape of the spiral longitudinally along the entire length of the first zone. Due to the length of the pipe and to ensure a constant flow of steam per floor, steam was injected with a pressure of 1 bar.

**The major disadvantage of this method** is that it does not provide a steam with a humidity corresponding to the technological process because steam at a pressure of 1 bar has a temperature of approximately 120°C, at which the steam is dry and no longer condenses on the surface of the dough piece.

Another disadvantage is that this steam pipe was mounted below the oil pipes of the next level (which has a temperature of 250 °C), causing the steam temperature to increase to approximately 150 °C. At this temperature, the steam pressure reaches approximately 3.7 bars, which causes the steam flow through the pipe to be blocked.

### Problem solving:

The main technical problem that the invention solves is the creation of the technologically correct environment in a spiral type bread oven, with the dough pieces entering through the lower part. The proposed solution ensures the necessary baking parameters (temperature and humidity) for the correct development of this technological process (higher temperature and humidity at the entrance to the oven and lower towards the end of the baking process). Naturally, warm air rises and cold air descends. Due to this phenomenon, in a spiral oven we have a lower temperature at the entrance and a higher temperature at the exit. For the same reason, the moist air, which is cooler, does not circulate to the middle of the oven, but remains at the bottom if it is not injected as in the proposed method, on the oven floors. At the same time, through the controlled cooling with steam on the floors, a barrier can be created through which the circulation of hot air towards the upper part of the oven is slowed down. In this way the temperature in the lower part of the oven can be increased.

The problem was solved by designing a low-pressure steam installation of maximum 0.42 bar and a temperature of 110°C, which consists of a system with thermally insulated distributors mounted transversely to the oven belt in 3 points in the 1st baking zone and two devices to inject the steam into baking zone 2. These distributors have the role of injecting steam into the oven and of permanently draining the condensate that can block the circulation of steam. So that the steam does not overheat, the area between the oil pipes and the short-distance transverse passage of the steam distributors was insulated. The thermal furnace was separated by installing refractory stainless steel sheets; vertically, zone 1 was isolated from zone 2, and in zone 1, the side walls were also insulated (22).

The technical problems also solved by the presented method are:
- The steam is transported until its injection at a temperature that still maintains the humidity necessary for the optimal development of the technological process;
- The quantities of steam between the floors can be controlled and regulated, both mechanically, with the help of steam valves that can be mounted both inside and outside the oven, and automatically, with the help of an electric valve with proportional control;
- Steam consumption can be set differently, depending on the work programs (for baking bread) entered in the oven just by setting a value on the oven control screen that controls an electric valve with proportional control.

**The major advantage** of this invention is that the method can be applied in the bakery industry to industrial spiral ovens with the entrance through the bottom of the dough, ensuring the space where the baking takes place with a quantity of steam with humidity corresponding to the technological process and pressure at 0.42 bar.

Spiral industrial bread ovens with bottom entry compared to those with top entry have the advantage that:
- the operator can see the pieces of dough permanently before entering the oven,
- in case of blockages of the oven, existing dough in the fermentation chamber can be evacuated much easier,
- the intervention on other machines such as the water sprinkler, the seed sprinkling machine, the dough cutter at the oven entrance is easier than if the entrance of the dough is made through the upper part of the oven at a height of 6 m.

### The proposed method also has the following advantages:

- low-pressure steam up to 0.42 bar is used for the steam supply of the oven, because the transport pipes have large dimensions that can ensure the flow of steam even at low pressure. For this, it is not necessary to ensure the ISCIR C11 prescriptions, which would require that the installation of the steam boiler and related installations be more complex and more expensive.

### Description of the invention

The invention refers to a steam supply installation for an industrial spiral type bread oven with the dough pieces entering through the lower part and to a method of transferring moisture from the steam in the pipes to the surface of the dough pieces. The steam enters through the proportional valve (2), reaches the thermally insulated distributor (4), from where it is distributed in five directions. The three pipes at the bottom of the distributor lead to the first three levels, one per floor. The fourth pipe injects steam with the help of the injector (3) on the fifth level and the fifth pipe injects steam on the seventh level. All pipes are connected with a steam valve (5) and flanges (16). Each of the three pipes at the bottom of the steam distributor (4) feeds one distributor (7) which, with the help of five pipes (6) mounted with sockets (18) at a height of 180 mm from the belt, injects steam through the nozzles (8) on the surface of the pieces of dough (12) that pass under these nozzles. Through the pipes (11) to which all the steam distributors are connected, the condensate is collected and transferred to the vessel (10) from where it is transported with a pump to the deaerator of the steam boiler. The condensate on the floor resulting from the steam that reaches the baking chamber is sucked by a pump (21) and discharged into the sewer. In order for the steam injected into the baking chamber to have a higher yield, baking zone 1 (5 levels) and the interval between zone 1 and zone 2 are insulated on the sides. Both the vertical distributor (4) and the injection systems (3) have a condensate reserve (15) thanks to the pipe (11) which does not take the condensate (15) from the base of the distributor (4), but from a certain distance (height), which allows the collection and storage of a condensate reserve (15), with the role of increasing the humidity of the steam before distribution or injection into the furnace.

### Sequence listing part of description.

The invention is presented in detail below, in connection with fig. 1-5, which represent:
- fig. 1, overall side view of the steam injection installation in the spiral furnace;
- fig. 2, side view of the vertical distributor (4);
- fig. 3, side view of the horizontal distributor (7);
- fig. 4, side view of the steam injection pipe (6);
- fig. 5, side view of the injection system (3).

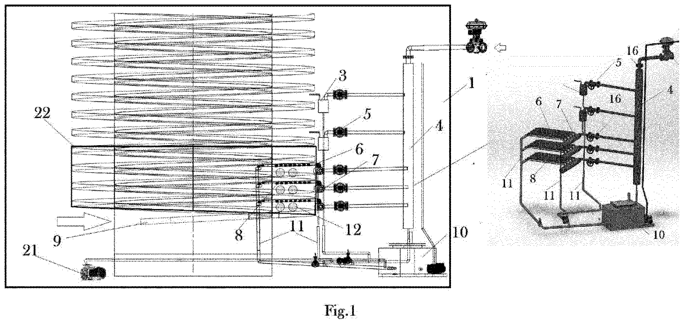

Figure 1 shows the basic diagram of the steam installation which is mounted in a spiral furnace (1) and consists of a vertical steam distributor (4), connected to 3 horizontal distributors (7) and 2 systems of steam injection (3). Each horizontal distributor injects steam on one floor with the help of five pipes (6) and nine nozzles (8) on each pipe.

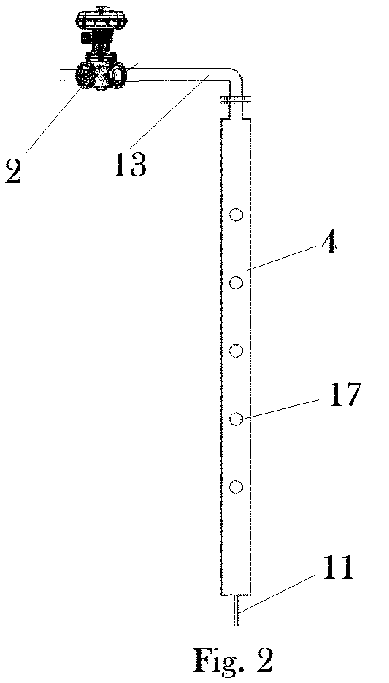

Figure 2 shows the side view of the vertical steam distributor (4), mounted inside the oven, thermally insulated and fed by a solenoid valve with proportional control (2) through a supply pipe (13). The distributor has five thermally insulated welded distribution pipes (17) and a condensate discharge pipe (11). The role of the distributor is to distribute the steam with increased humidity due to the condensate reserve (15), up to the 7th floor of the oven.

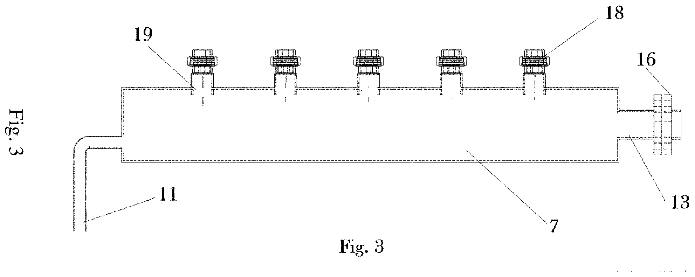

Figure 3 shows the side view of the horizontal distributor (7) which is connected to the vertical distributor with flanges (16) and has five horizontal pipes (19), each with nine nozzles (8) through which low pressure steam is injected until it reaches 0.42 bar. Its role is to create a longitudinal steam curtain through which the dough passes to moisten its surface.

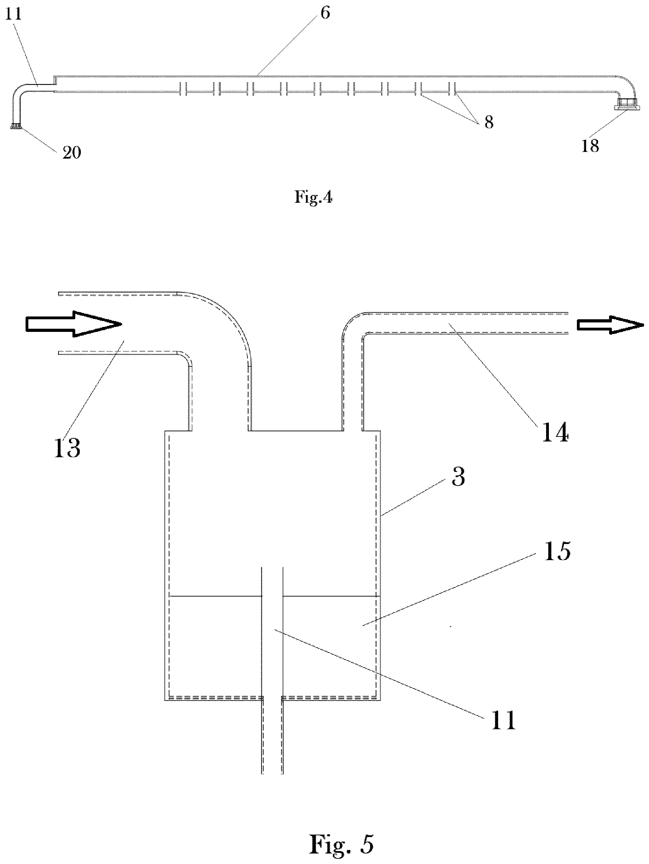

Figure 4 shows the side view of the injection pipe (6) which has nine nozzles (8); a part of each nozzle is inserted into the pipe to allow the condensate to drain through the pipe (11). The role of the injection pipe is to separate the injected steam from the condensate and form a transverse steam curtain.

Figure 5 shows the side view of the injection system (3) which is fed through the pipe (13) with condensing steam (15); the excess condensate is discharged through the pipe (11) and the steam is injected through the pipe (14). The role of the injection system is to locally inject the steam with increased humidity due to the condensate reserve (15) provided by its constructive way to increase the humidity in the baking zone 2.

## Claims

1. The method of increasing the humidity in an industrial spiral type oven with the dough pieces entering through the lower part, **characterized by** the fact that: an installation is used that injects low pressure steam, with a maximum value of 0.42 bar, in the form of a steam curtain on floors 1, 2 and 3 and in the form of a jet on floors 5 and 7, zone 1 was insulated from zone 2 and from the inside of the furnace (22), the vertical steam distributor (4) and the steam injection systems (12) have a condensate reserve (15) which helps to increase the humidity of the steam.

2. Steam injection installation, according to the method described in claim 1, in a spiral-type industrial bread oven with the entry of dough pieces through the bottom, **characterized by** the fact that: the installation consists of a vertical distributor (4 ) thermally insulated, mounted inside or outside the oven, with the role of distributing steam vertically, on floors 1,2,3,5 and 7, 3 horizontal distributors (7) mounted outside zone 1 which is insulated (22) with refractory stainless steel plate, with the role of injecting steam on a certain surface of each floor, 15 pipes (6) with 9 nozzles (8) each, through which steam is injected directly onto the surface of the dough pieces (12) that pass under them and a condensate drainage system (11) which is meant not to block the flow of steam through the pipes.
